# FASCICULE DE BREVET EUROPEEN

(11) **EP 0 844 951 B1**
(45) Date de publication et mention de la délivrance du brevet: **17.05.2000**
(21) Numéro de dépôt: 96928412.4
(22) Date de dépôt: 05.08.1996
(51) Int. Cl.: B60R 21/32

(54) **PROCEDE DE COMMANDE DU FONCTIONNEMENT D'UN AIRBAG DANS UN VEHICULE AUTOMOBILE**
VERFAHREN ZUR BETRIEBSSTEUERUNG EINES AIRBAGS IN EINEM KRAFTFAHRZEUG
PROCESS FOR CONTROLLING THE OPERATION OF A MOTOR VEHICLE AIRBAG

(30) Priorité: 17.08.1995 LU 88647
(43) Date de publication de la demande: 03.06.1998
(73) Titulaire: I.E.E. International Electronics & Engineering S.à.r.l., L-2632 Luxembourg (LU)
(72) Inventeur: SCHOOS, Aloyse, L-8094 Bertrange (LU); SCHLEEH, Thomas, D-54292 Trier (DE)
(74) Mandataire: Meyers, Ernest
(86) Numéro de dépôt international: EP9603449
(87) Numéro de publication internationale: WO9706990

(56) Documents cités:
- EP-A- 0 357 225
- EP-A- 0 650 869
- WO-A-94/22693
- GB-A- 2 236 419
- US-A- 3 748 639
- RESEARCH DISCLOSURE, no. 357, 1 Janvier 1994, EMSWORTH, GB, page 50 XP000425363 "HARDWARE SYSTEM AND LOGIC FOR A TUNABLE SIR SYSTEM"
- RESEARCH DISCLOSURE, no. 358, 1 Février 1994, EMSWORTH, GB, page 64 XP000439788 "Passenger Side Air Bag Deployment Inhibit"

## Description

La présente invention concerne un procédé de commande du fonctionnement d'un airbag dans un véhicule automobile et, plus particulièrement, d'un airbag qui est associé à un module de commande.

L'augmentation croissante du nombre d'équipements d'airbag dans les véhicules a permis de recueillir un grand nombre d'informations sur le fonctionnement des airbags, ce qui a contribué largement à leurs perfectionnements. L'un de ceux-ci consiste à soumettre le fonctionnement de l'airbag à une unité de commande intelligente qui est alimentée par différents détecteurs afin d'adapter le déploiement de l'airbag à certaines circonstances.

C'est ainsi, par exemple, que le document DE-4237072 propose un système de détection de l'occupation du siège du passager afin de mettre hors service cet airbag lorsque ce siège n'est pas occupé, afin de ne pas devoir remplacer l'airbag lorsque le véhicule est réparable après un choc qui a déclenché le déploiement de l'airbag.

Les documents LU-88 547 et 88 588 proposent un système de détection de l'occupation du siège passager par un siège auxiliaire pour enfants, ainsi que de l'orientation de ce siège auxiliaire afin de commander la mise hors service de l'airbag lorsque ce siège est orienté dans le sens contraire de la marche pour éviter qu'un enfant ne soit projeté violemment vers l'arrière du véhicule sous l'effet du déploiement de l'airbag.

De nouveaux générateurs de gaz sont, par ailleurs, à l'étude pour permettre, à l'avenir, un fonctionnement à plusieurs niveaux et un déploiement modulé et plus nuancé qu'un tout ou rien , notamment pour tenir compte de la masse d'inertie du passager, qui peut être obtenu par les informations fournies par le détecteur d'occupation du siège, lorsque celui-ci est constitué par un capteur de pression du type FSR.

On a également constaté que le déploiement d'un airbag peut être très dangereux pour un passager lorsque celui-ci occupe une position autre que sa position dite normale. Il faut, en effet, savoir qu'un airbag se déploie en forme de champignon avec un brusque jaillissement longitudinal suivi d'un gonflement latéral. Or, si la tête du passager, par exemple, lorsque celui-ci cherche dans le vide poche, se trouve trop près de la cassette de l'airbag, donc dans le champ de déploiement de l'airbag, notamment dans la trajectoire du jaillissement initial, l'effet de l'airbag peut être plus néfaste que bénéfique.

C'est la raison pour laquelle on a déjà proposé un procédé de commande du déploiement d'un airbag en fonction de la position de l'occupant du siège. Le document GB-A-2 236 419 décrit un tel procédé. La position de l'occupant est déterminée par des mesures télémétriques basées, soit sur la coupure d'un rayon par le corps de l'occupant, soit par le temps de parcours d'une onde réfléchie sur l'occupant.

Le document WO-A-94/22693 décrit également un tel procédé qui met en oeuvre des ondes radar pour reconstituer une image de l'occupant.

Ces mesures, basées sur la réflexion, peuvent toutefois être faussées par un objet que l'occupant tient en main, par exemple un livre ou un journal.

On connaît également des procédés basés sur une réflexion sur des marques prévues sur la ceinture de sécurité. De tels procédés sont connus de Research Disclosure, 1994, January, No. 357, Emsworth GB, p. 50 ou de US-A-3,748,639. Ces procédés servent à vérifier si la ceinture est mise ou à connaître son degré de déroulement.

Le but de la présente invention est de prévoir un procédé de commande du fonctionnement de l'airbag qui permet d'éliminer ou, du moins, de réduire, les risques d'accidents dus à un déploiement d'un airbag lorsque le passager derrière l'airbag occupe une position anormale.

Pour atteindre cet objectif, l'invention propose un procédé de commande du fonctionnement d'un airbag dans un véhicule automobile consistant à déterminer la position d'un occupant, notamment sa distance par rapport au centre de déploiement du ou des airbag(s) associé(s) à son siège et à commander la mise hors service de cet ou ces airbag(s) ou une modulation de son (leur) déploiement en fonction de cette position caractérisé en ce que l'on prévoit au moins un émetteur de champ électromagnétique et au moins un récepteur de champ électromagnétique, en ce que l'on dispose ces émetteur(s) et récepteur(s) de manière que le champ électromagnétique soit modifié par un mouvement de l'occupant grâce à un ou plusieurs marquage(s) approprié(s) prévu(s) sur la ceinture de sécurité et en ce que l'on détermine la position de l'occupant en fonction de l'influence de sa position sur le champ électromagnétique entre les émetteur(s) et récepteur(s).

En se basant sur le fait que la ceinture de sécurité doit forcément toujours suivre un mouvement vers l'avant du passager, on peut prévoir, sur la ceinture de sécurité, des repères ou marquages susceptibles d'être détectés, de détecter, d'influencer ou d'émettre un rayonnement.

Il est, par exemple, possible de prévoir sur la ceinture de sécurité un marquage électromagnétique autonome et passif, c'est-à-dire non alimenté, sous forme d'un résonateur ou d'une boucle résonnante qui est excitée par un champ électromagnétique créé par au moins une structure inductive. Cette ou ces structure inductive peuvent être prévues sur ou à proximité de la cassette airbag, ou derrière le passager dans le dos du siège.

Il est, toutefois, préférable de prévoir ces structures inductives à la fois devant le passager et derrière pour créer alternativement un champ électromagnétique et permettre, ainsi, des mesures complémentaires.

Ces structures inductives devant et/ou derrière le passager peuvent, en outre, être complétées par au moins une structure inductive prévue dans le toit du véhicule.

A chaque structure inductive d'excitation est associée une structure inductive réceptrice. Le marquage sous forme de résonateur électromagnétique influence le champ électromagnétique de la structure d'excitation dans lequel il se trouve et cette influence est repérable par la structure réceptrice de manière analogue au système de détection proposé dans les brevets LU-88547 et 88588.

Si le résonateur et, par conséquent, le champ électromagnétique d'excitation est modifié par une sous-porteuse synchrone avec la fréquence d'excitation, par exemple, à l'aide d'un circuit électronique approprié associé au résonateur, une détection synchrone par le récepteur permet une grande immunité à l'égard de parasites éventuels. Les boucles d'induction du récepteur détectant le champ électromagnétique résultant, éventuellement modulé, sont disposées de sorte que le signal reçu est inversement proportionnel à la distance entre les structures inductives et le marquage sur la ceinture de sécurité. Un tel marquage électronique est très peu perturbable et offre une bonne fiabilité de détection.

Outre le modulage par une sous-porteuse, il est possible de moduler la sous-porteuse par un code ou information d'identification, ce qui permet, à coup sûr, d'éliminer des parasites éventuels pouvant provenir, par exemple, d'un transpondeur emporté par le passager et n'ayant rien à voir avec le système de détection.

Il est également possible d'utiliser pour le marquage une modulation synchronisée avec la fréquence d'excitation en combination avec une démodulation synchronisée avec la fréquence d'excitation au niveau du récepteur.

On peut aussi utiliser successivement différents niveaux d'excitation de la structure émettrice afin de stimuler ou non le marquage de la ceinture en fonction de sa distance et obtenir ainsi une réponse suivant la distance et en fonction de la puissance d'excitation.

Selon une autre variante, il est également possible de prévoir sur la ceinture de sécurité un marquage non autonome, c'est-à-dire un marquage conducteur qui est alimenté en courant continu ou en courant alternatif à travers la ceinture. Ce marquage constitue alors une antenne émettrice dont les signaux sont captés par des structures ou antennes réceptrices prévues à proximité de la cassette airbag et/ou dans le dos du siège du passager et qui mesurent la distance à base de l'atténuation du champ électromagnétique en fonction de la distance. Inversement, il est également possible de prévoir la réception sur la ceinture et l'antenne émettrice au niveau de la cassette ou dans le dos du siège.

Dans les différents procédés décrits ci-dessus, qui sont basés sur un marquage de la ceinture, il est avantageux de prévoir sur la ceinture plusieurs marquages identiques ou analogues. Ceci offre une meilleure garantie d'une communication optimale entre les marquages, d'une part, et les émetteurs et récepteurs, d'autre part et réduit les erreurs pouvant résulter des changements de position du marquage par suite d'un déroulement plus ou moins fort de la ceinture. En outre, on élimine les risques d'erreur qui pourraient être causés par un mauvais fonctionnement d'un marquage.

Les différents marquages sur la ceinture peuvent, par ailleurs, se distinguer par des sous-porteuses et/ou des codes d'identification différents, ce qui contribue à une plus grande fiabilité des mesures.

Il est également possible de combiner ou d'associer plusieurs des différents principes de mesure décrits ci-dessus dans un même airbag, ce qui augmente bien entendu la fiabilité et les possibilités d'interprétation des résultats.

Le système de détection préconisé par la présente invention n'est pas limité à l'airbag du passager avant, mais peut également être appliqué à l'airbag du chauffeur et, le cas échéant, aux airbags des passagers arrière.

## Revendications

1. Procédé de commande du fonctionnement d'un airbag dans un véhicule automobile consistant à déterminer la position d'un occupant, notamment sa distance par rapport au centre de déploiement du ou des airbag(s) associé(s) à son siège et à commander la mise hors service de cet ou ces airbag(s) ou une modulation de son (leurs) déploiement(s) en fonction de cette position caractérisé en ce que l'on prévoit au moins un émetteur de champ électromagnétique et au moins un récepteur de champ électromagnétique, en ce que l'on dispose ces émetteur(s) et récepteur(s) de manière que le champ électromagnétique soit modifié par un mouvement de l'occupant grâce à un ou plusieurs marquage(s) conducteur(s) approprié(s) prévu(s) sur la ceinture de sécurité et en ce que l'on détermine la position de l'occupant en fonction de l'influence de sa position sur le champ électromagnétique entre les émetteur(s) et récepteur(s).

2. Procédé selon la revendication 1, caractérisé en ce que l'on prévoit sur la ceinture de sécurité de l'occupant un ou plusieurs marquages conducteurs autonomes faisant office de résonateur et coopérant avec des structures inductives émettrices et réceptrices disposées à un ou plusieurs endroits fixes de l'habitacle et/ou dans le dos du siège du passager.

3. Procédé selon la revendication 1, caractérisé en ce que l'on prévoit sur la ceinture de sécurité un ou plusieurs marquage(s) conducteur(s) alimenté(s) en courant continu ou alternatif faisant office d'antenne(s) émettrice(s) ou réceptrice(s) et coopérant avec une ou plusieurs antenne(s) réceptrice(s) ou émettrice(s) disposée(s) à un ou plusieurs endroit(s) fixe(s) de l'habitacle et/ou dans le dos du siège du passager.

## Patentansprüche

1. Verfahren zur Betriebssteuerung eines Airbags in einem Kraftfahrzeug, welches darin besteht, die Position eines Fahrgastes zu erfassen, insbesondere sein Abstand zum Entfaltungszentrum des oder der Airbags, welcher seinem Sitz zugeordnet ist oder sind und die Ausserbetriebsetzung dieses oder dieser Airbags oder eine Modulation ihrer Entfaltung in Abhängigkeit der Position zu betätigen, dadurch gekennzeichnet, dass man zumindest einen Erzeuger eines elektromagnetischen Feldes und zumindest einen Empfänger eines elektromagnetischen Feldes vorsieht, dass man diese Erzeuger und Empfänger derart anordnet, dass das elektromagnetische Feld durch eine Bewegung des Fahrgastes und dank einer oder mehrerer geeigneter auf dem Gurt vorgesehenen Markierung(en) geändert wird und dass man die Position des Fahrgastes in Abhängigkeit des Einflusses seiner Position auf das elektromagnetische Feld zwischen dem oder den Erzeuger(n) und dem oder den Empfänger(n) bestimmt.

2. Verfahren nach Anspruch 1, dadurch gekennzeichnet, dass man auf dem Sicherheitsgurt des Fahrgastes eine oder mehrere als Resonator dienende unabhängige Leitermarkierungen vorsieht, welche mit an einer oder mehreren an festen Stellen des Wageninnern und/oder in der Rückenlehne des Fahrgastsitzes angeordneten induktiven Sendeund Empfangsstrukturen zusammenwirken.

3. Verfahren nach Anspruch 1, dadurch gekennzeichnet, dass man auf dem Sicherheitsgurt eine oder mehrere mit Gleichstrom oder Wechselstrom gespeiste Leitermarkierung(en) vorsieht, welche als Sendeoder Empfangsantenne(n) dient oder dienen und welche mit einer oder mehreren an festen Stellen des Wageninneren und/oder in der Rücklehne des Fahrgastsitzes angeordneten Sende- oder Empfangsantenne(n) zusammenwirken.

## Claims

1. Method for controlling the operation of an airbag in a motor vehicle, consisting in determining the position of an occupant, particularly his distance from the centre of deployment of the airbag(s) associated with his seat and in disabling this or these airbag(s) or altering its (their) deployment(s) as a function of this position, characterized in that at least one electromagnetic-field emitter and at least one electromagnetic-field receiver are provided, in that these emitter(s) and receiver(s) are arranged in such a way that the electromagnetic field is modified by a movement of the occupant thanks to one or more appropriate conductive marking(s) provided on the seatbelt and in that the position of the occupant is determined as a function of the influence that his position has on the electromagnetic field between the emitter(s) and receiver(s).

2. Method according to Claim 1, characterized in that one or more autonomous conductive markings are provided on the occupant's seatbelt and these act as resonators and interact with emitting and receiving inductive structures arranged at one or more fixed points in the cabin and/or in the back of the passenger seat.

3. Method according to Claim 1, characterized in that one or more conductive marking(s) powered with DC or AC current is (are) provided on the seatbelt and these act as emitting or receiving antenna(e) and interact with one or more receiving or emitting antenna(e) arranged at one or more fixed point(s) in the cabin and/or in the back of the passenger seat.
